# NEUE EUROPÄISCHE PATENTSCHRIFT

(11) **EP 1 786 646 B2**
(45) Veröffentlichungstag und Bekanntmachung des Hinweises auf die Entscheidung über den Einspruch: **31.08.2022**
(45) Hinweis auf die Patenterteilung: 26.06.2019
(21) Anmeldenummer: 05777180.0
(22) Anmeldetag: 02.09.2005
(51) Int. Cl.: B60L 1/00, B61D 1/00, B61C 3/00

(54) **VERFAHREN ZUR ZUGBILDUNG AUS EINZELWAGEN**
METHOD FOR TRAIN FORMATION FROM INDIVIDUAL CARS
PROCEDE POUR FORMER UN TRAIN A PARTIR DE WAGONS INDIVIDUELS

(30) Priorität: 07.09.2004 DE 102004043602
(43) Veröffentlichungstag der Anmeldung: 23.05.2007
(73) Patentinhaber: Bombardier Transportation GmbH, 10785 Berlin (DE)
(72) Erfinder: SEGIETH, Christian, 13503 Berlin (DE); JAHNS, Manfred, 12305 Berlin (DE)
(74) Vertreter: Cohausz & Florack
(86) Internationale Anmeldenummer: PCT/EP2005/009447
(87) Internationale Veröffentlichungsnummer: WO 2006/027165

(56) Entgegenhaltungen:
- EP-A1- 1 024 070
- WO-A1-85/01258
- DD-A1- 229 363
- DE-A- 1 588 414
- DE-A1- 4 036 652
- DE-A1- 10 045 810
- DE-C- 504 416
- DE-U1- 20 002 814
- JP-A- 54 157 913
- US-A- 2 563 571
- US-A- 3 380 399
- US-A- 6 087 739
- US-A- 6 087 739
- "Die Bahndienstwagen bei der Deutschen Reichsbahn, serie 6", Einheitshilfszug, DIE Archiv, 2002, pages 5-11,
- "Neuer Standart-Hilfszug der Deutschen Bahn", Schienenfahrzeuge, March 1979 (1979-03), pages 91-95,
- UIC.-CODE 555 Electric lighting in passenger rolling stock
- UIC-KO.DEX 550 "Elektrische.Energieversorguogseinrichtung en.für Wagen der Reisezugwagenbauart''

## Beschreibung

Die vorliegende Erfindung betrifft ein Verfahren zur Zugbildung aus Einzelwagen ohne Traktionsausrüstung, insbesondere aus Reisezugwagen, bei dem wenigstens eine Traktionseinheit mit wenigstens einem autonom betreibbaren ersten Einzelwagen zu einem Zugverbund gekoppelt wird. Sie betrifft weiterhin einen Zugverbund, der nach diesem erfindungsgemäßen Verfahren gebildet werden kann. Schließlich betrifft sie einen Einzelwagen ohne Traktionsausrüstung für einen erfindungsgemäßen Zugverbund.

Bei solchen Einzelwagen ohne Traktionsausrüstung handelt es sich meist um Reisezugwagen, d. h. Wagen, die Reisende befördern, ohne einen eigenen Antrieb zu haben. Anders als bei so genannten Gliederzugwagen für Gliederzüge weisen diese Einzelwagen an beiden Enden Fahrwerke auf, sodass sie einzeln rangierbar sind. Sie werden in der Regel mit Lokomotiven oder dergleichen gekoppelt, welche die Traktion für den Zugverbund zur Verfügung stellen. Die Lokomotive versorgt dabei in der Regel die mit ihr gekoppelten Einzelwagen mit der erforderlichen Energie für die Versorgung der Bordsysteme wie Beleuchtung, Klimatisierung, Lüftung, Informationssysteme etc. Dies geschieht über eine durch den Zugverbund durchgehende Hochspannungsleitung, die so genannte Zugsammelschiene (beispielsweise 1000 V bis 3000 V, Gleich- oder Wechselspannung). Die Lokomotive übernimmt in der Regel auch die Versorgung der mit ihr gekoppelten Einzelwagen mit Steuerinformationen und gegebenenfalls weiteren Informationen. Dies geschieht über eine durch den Zugverbund durchgehende Informationsleitung, häufig einen so genannten Zugbus (z. B. WTB, Wired Train Bus nach UIC 556: "informationsübertragung im Zug - Zugbus"). Weiterhin können Informationen beispielsweise über konventionelle Leitungen, z.B. UIC 558: "Fernsteuer- und Informationsleitung; Technische Einheitsmerkmale für die Ausrüstung der RIC-Reisezugwagen", übertragen werden. Die Informationen können auch über andere Medien übertragen werden, z.B. für die Druckluftbremse durch pneumatische Leitungen oder auch hydraulische.

Solche Reisezugwagen bestehen heute aus einem Wagenkasten von ca. 20 bis 28 m Länge. An den Enden sind Puffer und Zughaken, seltener automatische Kupplungen angebracht. Die Wagen werden einstöckig oder doppelstöckig ausgeführt. Reisezugwagen werden in Europa im Regelfall entsprechend den Forderungen der UIC ausgeführt, um durch standardisierte mechanische Schnittstellen (Puffer, Kupplung, Bremse, Übergang) und standardisierte elektrische Schnittstellen (Energieversorgung, Steuerungsleitungen, Informationsleitungen) eine universelle Austauschbarkeit und damit einen internationalen Einsatz der Wagen zu gewährleisten. Wesentliche Teile der Wagen sind in UIC 567: "Allgemeine Bestimmungen für Reisezugwagen" festgelegt. Spezielle Fragen der Energieversorgung sind in den UIC 550: "Elektrische Energieversorgungseinrichtungen für Wagen der Reisezugbauart" und UIC 552: "Versorgung der Züge mit elektrischer Energie - Technische Merkmale der Zugsammelschiene (ZS)" festgelegt.

Die bekannten Reisezugwagen werden üblicherweise als autonom betreibbare Wagen ausgeführt, d. h. jeder Wagen kann für sich alleine an eine entsprechenden Traktionseinheit gekoppelt betrieben werden. Dabei kann er mit beliebigen anderen Wagen über UIC konforme Schnittstellen gekoppelt werden. Sämtliche für den Betrieb erforderlichen Geräte sind in jedem Wagen vorhanden und für die Versorgung jeweils dieses einen Wagens ausgelegt. Dadurch können unterschiedlich lange Züge aus den unterschiedlichsten Wagen gebildet werden.

Zwar lässt sich mit den bekannten Reisezugwagen - anders als beispielsweise bei Gliederzügen mit mehr oder weniger fest vorgegebener Wagenreihung - eine nahezu unbegrenzte Freiheit bei der Bildung eines Zugverbundes erzielen. Die autonom betreibbare Gestaltung der Reisezugwagen bringt jedoch auch eine Reihe von Nachteilen mit sich.

Durch die Ausrüstung jedes Wagens mit den erforderlichen Aggregaten für die Energieversorgung, Energieverteilung, Steuerung und Fahrgastinformation sowie mit den erforderlichen Bremsaggregaten werden die Wagen zum einen schwer, äußerst komplex und teuer.

Ein weiterer Nachteil tritt auf, wenn die erforderlichen Aggregate, beispielsweise bei nicht als Hochflurwagen ausgebildeten Wagen, nicht oder nicht vollständig unterhalb des Wagenbodens oder im Dachraum angeordnet werden können. Bei niederflurigen Wägen muss beispielsweise zumindest ein Teil der erforderlichen Aggregate dann in Schränken im Fahrgastraum untergebracht werden, wodurch aufgrund des dafür notwendigen Platzbedarfs die Transportkapazität des Wagens sinkt.

Bei Triebzügen ist es hingegen üblich, betriebliche Einheiten zu bilden, die aus zwei oder mehreren Einzelwagen bestehen. Der Grund dafür liegt darin, daß die betriebsnotwendigen Aggregate auf beide oder mehrere Wagen verteilt werden können. Die Einzelwagen können zu Wartungszwecken getrennt werden, müssen aber wegen der Verteilung der Aggregate immer zusammen gekuppelt verkehren. So sind beispielweise die Züge der Berliner S-Bahn nach deren Elektrifizierung in der 20er Jahren mit je einem S-Wagen (Schaltwerk-Wagen) und einem K-Wagen (Kompressor-Wagen) in einem sogenannten Viertelzug ausgeführt worden. Dieses Prinzip der auf mehrere Wagen verteilten Anordnung der betriebsnotwendigen Aggregate wurde bis heute beibehalten. Ähnliche Konzepte wurden auch für andere Triebzüge und U-Bahnen angewendet.

Dieses Prinzip hat zwar den Vorteil leichterer, weniger komplexer und damit kostengünstigerer Wagen. Es bringt jedoch den Nachteil einer geringeren Flexibilität bei der Zugbildung mit sich. So können insbesondere nur Züge mit Wagenzahlen gebildet werden, die einem Vielfachen der Wagenzahl der Grundeinheiten entsprechen.

Ein gattungsgemäßer Güterzug mit einem Versorgungswagen, der die Energieversorgung eines nicht autonom betreibbaren weiteren Güterwagens übernimmt, ist aus der US 6,087,739 bekannt.

Der vorliegenden Erfindung liegt daher die Aufgabe zu Grunde, ein Verfahren zur Zugbildung, einen Zugverbund und Einzelwagen der eingangs genannten Art zur Verfügung zu stellen, welche die oben genannten Nachteile nicht oder zumindest in geringerem Maße aufweist und insbesondere bei einfacher und kostengünstiger Realisierbarkeit eine möglichst flexible Zugbildung gewährleisten.

Die vorliegende Erfindung löst diese Aufgabe ausgehend von einem Verfahren zur Zugbildung gemäß dem Oberbegriff des Anspruchs 1 durch die im kennzeichnenden Teil des Anspruchs 1 angegebenen Merkmale. Sie löst diese Aufgabe weiterhin ausgehend von einem Zugverbund gemäß dem Oberbegriff des Anspruchs 9 durch die im kennzeichnenden Teil des Anspruchs 9 angegebenen Merkmale. Schließlich löst sie diese Aufgabe durch Einzelwagen mit den Merkmalen der Ansprüche 21 und 22 sowie durch eine Wageneinheit mit den Merkmalen des Anspruchs 23.

Der vorliegenden Erfindung liegt die technische Lehre zu Grunde, dass man bei einfacher und kostengünstiger Herstellbarkeit eine flexible Zugbildung aus Einzelwagen ohne Traktionsausrüstung ermöglicht, wenn als erster Einzelwagen ein Versorgungswagen verwendet wird, der zur Übernahme im Wesentlichen der gesamten Energieversorgung und Informationsversorgung wenigstens eines nicht autonom betreibbaren zweiten Einzelwagens im Normalbetrieb ausgebildet ist.

Zur Energieversorgung der Wagen wird heute überwiegend elektrische Energie verwendet. Andere Energieformern sind zum Beispiel pneumatische Energie, die beispielsweise für die Bremsversorgung und/oder die Luftfeder und andere Antriebe eingesetzt wird. Diese wird über die eine durchgehende Luftleitung, die sogenannte Hauptluftbehälterleitung, übertragen. Auch hydraulische Energie kann bereitgestellt und im Zugverband verwendet werden.

Im Zugverband verwendete Informationen sind beispielsweise solche über den Zustand des Zuges, zum Steuern des Zugverbandes und einzelner in ihm angeordneter Systeme, die Diagnose oder solche zur Information der Passagiere und/oder des Zugpersonals. Diese werden üblicherweise elektrisch über konventionelle Steuerleitungen zum Beispiel über Relais übertragen oder über digitale Bussysteme. Für pneumatisch gesteuerte Bremssysteme oder elektropneumatisch gesteuerte Bremssysteme werden Bremsinforationen über eine Druckluftleitung, die sogenannte Hauptluftleitung, übertragen.

Der Versorgungswagen ist hierbei erfindungsgemäß so ausgebildet, dass er im Normalbetrieb im Wesentlichen die gesamte Energieversorgung und/oder im Wesentlichen die gesamte Informationsversorgung wenigstens eines nicht autonom betreibbaren zweiten Einzelwagens übernimmt, der hier im Folgenden auch als Ergänzungswagen bezeichnet wird. Es versteht sich hierbei jedoch, dass der jeweilige zweiten Einzelwagen aus Sicherheitsgründen entsprechende Notversorgungseinrichtungen für den - gegebenenfalls kurzzeitigen - Notbetrieb aufweisen kann. Darüber hinaus können Ergänzungswagen auch einzelne System enthalten, die Teilaufgaben im Ergänzungswagen autark vom Versorgungswagen realisieren. So kann beispielsweise die Energieversorgung nur in den Versorgungswagen angeordnet sein, um die Ergänzungswagen mit zu versorgen, aber die Bremssteuerung in jedem Wagen des Zugverbundes, auch im Ergänzungswagen, angeordnet sein.

Der erfindungsgemäße Versorgungswagen kann mit einem oder mehreren zweiten Einzelwagen, für deren Versorgung er ausgelegt ist, zu einer ersten Wageneinheit gekoppelt werden, die eine Reihe von Vorteilen gegenüber einer gekoppelten Einheit aus derselben Anzahl bekannter autonom betreibbarer Einzelwagen mit sich bringt.

So führt sie zum einen zu einer deutlichen Verringerung der Gesamtmasse des Zugverbunds. So kann die Energieversorgungseinrichtung des Versorgungswagens, die mit höherer Leistung zur Versorgung der Wagen der ersten Wageneinheit ausgestattet ist, so ausgeführt werden, dass ihre Masse deutlich geringer ist als die Gesamtmasse der bekannten Einzelenergieversorgungseinrichtungen der Einzelwagen. Diese Massenreduktion macht sich nicht nur bei der Herstellung der Wagen sondern insbesondere auch bei Beschleunigungsvorgängen des Zugverbunds bemerkbar. So wird dadurch zum einen Energie eingespart. Zudem kann die Bremsausrüstung wiederum entsprechend leichter dimensioniert werden, was zu einer weiteren Massenreduktion führt.

Da die Kosten für die elektrische Ausrüstung, gegebenenfalls auch für die pneumatische Ausrüstung und/oder sonstige Medienversorgungsausrüstungen, den Wagenherstellungspreis wesentlich beeinflussen, können mit der vorliegenden Erfindung die Herstellungskosten gesenkt werden. So ist eine Ausrüstung mehrfacher Leistung deutlich günstiger herzustellen, als eine entsprechende Anzahl von Ausrüstungen einfacher Leistung. Gleiches gilt für die erforderlichen Einbauten für die Integration der Ausrüstung in die Wagen (Gehäuse, Schränke, Schalttafeln, Umrichter, Lüfter etc.), die Montage der Ausrüstungen und deren Inbetriebsetzung.

Weiterhin reduziert sich auch der Aufwand für die Anbindung der Wagen an die Zugenergieversorgung und die Zugsteuerung deutlich. So muss nur jeder Versorgungswagen die erforderlichen aufwändigen Schnittstellen, wie beispielsweise Hauptschalter, Erdungseinrichtung, aber auch Kuppeldosen, enthalten, während die Ergänzungswagen deutlich einfachere Schnittstellen für die Anbindung an den Versorgungswagen umfassen müssen. Auch die Anzahl der erforderlichen Steuerrechner (für Wagensteuerung, Informationssysteme und ggf. auch für die Bremseinrichtungen) kann deutlich reduziert werden, da sie jeweils nur in dem Versorgungswagen vorzusehen sind. Werden Versorgungswagen zum autarken Einsatz vorgesehen, können einige Schnittstellen an den Wagenenden gegebenenfalls vereinfacht ausgeführt werden.

Insgesamt nimmt die gesamte Ausrüstung für die erste Wageneinheit weniger Bauraum ein als die gesamte Ausrüstung für die bekannten Einzelwagen. Insbesondere bei niederflurigen Wagen ist der Einbau der Ausrüstung in Schränken im Fahrgastraum günstiger zu gestalten. So beschränkt sich ein Großteil der Einbauten auf den Versorgungswagen, während in den Ergänzungswagen kaum Einbauten vorzunehmen sind. Wegen der beschriebenen insgesamt geringeren Anzahl und Masse der Ausrüstungen und damit dem insgesamt geringeren erforderlichen Bauraum für die Ausrüstungen der ersten Wageneinheit steht insgesamt mehr Nutzfläche in der Wageneinheit zur Verfügung.

Ein weiterer Vorteil der vorliegenden Erfindung gegenüber den bekannten Triebzügen mit verteilter Ausrüstung liegt in der autonomen Betreibbarkeit der Versorgungswagen. Diese können auch einzeln, d. h. ohne Ergänzungswagen in den Zugverbund eingebunden werden, sodass Züge mit beliebiger geradzahliger oder ungeradzahliger Wagenanzahl bis hin zu den betrieblichen Maximalzahlen gebildet werden können.

Der Vorteil gegenüber Gliederzügen liegt darin, dass die erfindungsgemäß verwendeten Wagen Einzelwagen sind und daher nach wie vor wie bekannte Einzelwagen rangiert und gewartet werden können. Entsprechend den betrieblichen Notwendigkeiten können Züge verstärkt und geschwächt werden. So sind Züge mit bis zu 16 Wagen möglich, je nach Leistungsfähigkeit der Lokomotive und deren Energieversorgung bzw. entsprechend der Infrastruktur oder der Steuerungselektronik,

Der Versorgungswagen kann grundsätzlich zur Versorgung einer beliebigen Anzahl von zweiten Einzelwagen ausgelegt sein. Eine besonders flexible Zuggestaltung bei kostengünstiger Herstellbarkeit der Wagen ist jedoch möglich, wenn der Versorgungswagen zur Energieversorgung und/oder Informationsversorgung genau eines nicht autonom betreibbaren zweiten Einzelwagens im Normalbetrieb ausgebildet ist. Da der Aufwand für die Versorgung mehrerer Wagen mit der Wagenanzahl überproportional steigt, ist mit dieser Zweierkonfiguration auch eine besonders kostengünstige Herstellbarkeit der Wagen gewährleistet.

Die Minimalkonfiguration eines Zugverbunds, der mit dem erfindungsgemäßen Verfahren hergestellt werden kann, ist demgemäß ein Zug mit einer Traktionseinrichtung, beispielsweise einer Lokomotive, und einem damit gekoppelten Versorgungswagen. Der Versorgungswagen wird mit wenigstens einem nicht autonom betreibbaren zweiten Einzelwagen zu einer ersten Wageneinheit gekoppelt. Der zweite Einzelwagen ist dabei derart ausgebildet, dass im Normalbetrieb im Wesentlichen seine gesamte Energieversorgung und/oder Informationsversorgung durch den Versorgungswagen erfolgt. Derartige im Normalbetrieb durch den Versorgungswagen versorgte, nicht autonom betreibbare zweite Einzelwagen werden im Folgenden auch als Ergänzungswagen bezeichnet.

Aus den oben bereits erläuterten Gründen werden dabei bevorzugt ein Versorgungswagen und ein Ergänzungswagen gekoppelt, sodass die erste Wageneinheit bevorzugt als Zweiwageneinheit mit einem Versorgungswagen und einem Ergänzungswagen ausgebildet ist.

Um die oben geschilderten Vorteile besonders zum Trägen kommen zu lassen, wird bevorzugt ein Zugverbund gebildet, der eine Mehrzahl von ersten Wageneinheiten umfasst. Weiterhin ist zur Erzielung einer beliebigen Wagenanzahl bevorzugt vorgesehen, dass ein Zugverbund gebildet wird, der wenigstens einen nicht in einer ersten Wageneinheit eingebundenen Versorgungswagen umfasst.

Die erfindungsgemäß gestalteten Einzelwagen können grundsätzlich beliebige Funktionen und Gestaltungen aufweisen. So kann es sich um Einzelwagen üblicher hochfluriger, einstöckiger oder doppelstöckiger Bauform mit UIC-konformem Gummiwulst-Übergang oder Faltbalgübergängen handeln. Ebenso kann es sich um Wagen niederfluriger Bauart handeln. Weiterhin kann es sich um ein- oder doppelstöckige Steuerwagen handeln. Ebenso sind Sonderbauformen aufgrund spezieller Zugkonzepte realisierbar, z. B. niederflurige Anschluss- und/oder Steuerwagen.

Dabei können insbesondere sowohl Ergänzungswagen als auch Versorgungswagen als Steuerwagen ausgeführt werden, um einen Wendezug- oder Flügelzugbetrieb zu ermöglichen. Um auch in einem solchen Steuerwagen noch eine hohe Transportkapazität zur Verfügung zu stellen, ist dieser bevorzugt durch einen Ergänzungswagen realisiert. Bevorzugt wird daher ein Versorgungswagen mit einem zweiten Einzelwagen zu einer zweiten Wageneinheit gekoppelt, wobei der zweite Einzelwagen als im Normalbetrieb nicht autonom betreibbarer Steuerwagen ausgebildet ist.

Die vorliegende Erfindung betrifft weiterhin einen Zugverbund aus Einzelwagen ohne Traktionsausrüstung, insbesondere aus Reisezugwagen, mit wenigstens einer Traktionseinheit und wenigstens einem mit der Traktionseinheit gekoppelten autonom betreibbaren ersten Einzelwagen. Erfindungsgemäß ist vorgesehen, dass der erste Einzelwagen ein Versorgungswagen ist, der zur Übernahme im Wesentlichen der gesamten Energieversorgung und Informationsversorgung wenigstens eines nicht autonom betreibbaren zweiten Einzelwagens im Normalbetrieb ausgebildet ist.

Dieser erfindungsgemäße Zugverbund lässt sich mit dem oben beschriebenen erfindungsgemäßen Verfahren herstellen. Mit ihm lassen sich die oben beschriebenen Vorteile und Varianten in demselben Maße realisieren, sodass diesbezüglich auf die obigen Ausführungen Bezug genommen wird.

Die Versorgung des ersten Einzelwagens, also des Versorgungswagens, mit Energie und/oder Informationen kann auf beliebige geeignete Weise erfolgen. So kann eine autonome interne Versorgung ebenso vorgesehen sein, wie eine externe Versorgung über eine entsprechende geeignete Schnittstelle. Üblicherweise erfolgt über eine oder mehrere geeignete Schnittstellen eine Versorgung durch die Traktionseinheit des Zugverbunds. Bevorzugt ist daher vorgesehen, dass der erste Einzelwagen zur Energieversorgung und/oder Informationsversorgung durch die Traktionseinheit ausgebildet ist.

Die Energieversorgung der Einzelwagen kann auf beliebige geeignete Weise über die Versorgungswagen erfolgen. Bei bevorzugten Varianten des erfindungsgemäßen Zugverbunds ist zur Energieversorgung der Einzelwagen eine Zugenergieversorgungseinrichtung vorgesehen. Diese Zugenergieversorgungseinrichtung kann beispielsweise einen entsprechenden Generator, Wechsel- oder Gleichrichter umfassen, der sich beispielsweise in der Traktionseinheit, z. B einer Lokomotive, oder einen weiteren Wagen befindet. Diese Zugenergieversorgungseinrichtung umfasst weiterhin eine Zugenergieverteilungseinrichtung, insbesondere eine Zugsammelschiene, welche die Energieverteilung zu den Versorgungswagen sicherstellt.. Der Versorgungswagen umfasst dann eine erste Wagenenergieversorgungseinrichtung, die zur Energieversorgung des Versorgungswagens mit der Zugenergieverteilungseinrichtung verbunden ist. Hierdurch kann eine besonders einfache Energieversorgung der Einzelwagen realisiert werden.

Bevorzugt ist wenigstens ein Versorgungswagen mit wenigstens einem zweiten Einzelwagen zu wenigstens einer ersten Wageneinheit gekoppelt. Der Versorgungswagen umfasst dabei eine erste Wagenenergieversorgungseinrichtung, die zur Energieversorgung des Versorgungswagens und des Ergänzungswagens ausgebildet ist, sowie eine Wagenenergieverteilungseinrichtung, insbesondere eine Wagensammeischiene. Der Ergänzungswagen ist dann zur Energieversorgung mit der Wagenenergieverteilungseinrichtung verbunden, um eine einfach gestaltete Energieversorgung des Ergänzungswagens zu realisieren.

Bei nicht erfindungsgemäßen Gestaltungen kann die Informationsversorgung der Einzelwagen auf beliebige geeignete Weise über die Versorgungswagen erfolgen. So kann auch hier eine autonome Informationsversorgung in jedem oder einzelnen Versorgungswagen vorgesehen sein. Erfindungsgemäß ist jedoch eine zentrale Zuginformationsversorgungseinrichtung vorgesehen. Diese kann beispielsweise einen Zentralrechner oder dergleichen umfassen, der sich beispielsweise in der Traktionseinheit, z. B. einer Lokomotive, befindet. Ein zur Zuginformationsversorgungseinrichtung gehörender Rechner kann aber auch in einem der Einzelwagen angeordnet sein. Dies kann insbesondere dann der Fall sein, wenn ein Steuerwagen vorgesehen ist, in dem dann bevorzugt ein entsprechender zur Zuginformationsversorgungseinrichtung gehörender Steuerrechner angeordnet ist.

Die Zuginformationsversorgungseinrichtung umfasst dann weiterhin eine Zuginformationsvertei-lungseinrichtung, die ein Zugbus ist über welche die entsprechenden Informationen an die Versorgungswagen verteilt werden. Hierbei kann es sich um eine drahtlose und/oder eine drahtgebundene Verteilungseinrichtung handeln.

Der Versorgungswagen umfasst dann wiederum eine erste Wageninformationsversorgungseinrichtung, die zur Informationsversorgung des Versorgungswagens mit der Zuginformationsverteilungseinrichtung verbunden ist.

Der Versorgungswagen ist mit wenigstens einem zweiten Einzelwagen zu einer ersten Wageneinheit gekoppelt. Der Versorgungswagen umfasst dann eine erste Wageninformationsversorgungseinrichtung, die zur Informationsversorgung des Versorgungswagens und des Ergänzungswagens ausgebildet ist und eine Wageninformationsverteilungseinrichtung, die ein Wagenbus ist, umfasst. Der Ergänzungswagen ist dann zur Informationsversorgung mit der Wageninformationsverteilungseinrichtung verbunden. Die Wageninformationsversorgungseinrichtung kann dabei wegen der geringen Anzahl an zu versorgenden Wagen entsprechend einfach und mit hohen Übertragungsraten gestaltet werden. Hierdurch kann eine einfache, gute und schnelle Informationsversorgung der Ergänzungswagen gewährleistet werden.

Die Traktionseinheit kann ein beliebiges Schienenfahrzeug sein, welches entsprechende Traktionseinrichtungen wie Motoren und davon angetriebene Radsätze aufweist. Bevorzugt handelt es sich bei der Traktionseinheit um eine Lokomotive oder einen Triebwagen.

Die vorliegende Erfindung betrifft weiterhin einen Einzelwagen ohne Traktionsausrüstung, insbesondere einen Reisezugwagen, der als autonom betreibbarer erster Einzelwagen eines erfindungsgemäßen Zugverbunds ausgebildet ist. Als solcher weist er die oben beschriebenen Merkmale eines ersten Einzelwagens des erfindungsgemäßen Zugverbunds auf.

Die vorliegende Erfindung betrifft weiterhin einen Einzelwagen ohne Traktionsausrüstung, insbesondere einen Reisezugwagen, der als nicht autonom betreibbarer zweiter Einzelwagen eines erfindungsgemäßen Zugverbunds ausgebildet ist. Als solcher weist er die oben beschriebenen Merkmale eines zweiten Einzelwagens des erfindungsgemäßen Zugverbunds auf.

Weiterhin betrifft die Erfindung eine Wageneinheit aus einem erfindungsgemäßen ersten Einzelwagen und wenigstens einem erfindungsgemäßen zweiten Einzelwagen.

Diese erfindungsgemäßen Einzelwagen bzw. Wageneinheiten lassen sich zur Herstellung des oben beschriebenen erfindungsgemäßen Zugverbunds mit dem oben beschriebenen erfindungsgemäßen Verfahren einsetzten. Mit ihnen lassen sich die oben beschriebenen Vorteile und Varianten in demselben Maße realisieren, sodass diesbezüglich auf die obigen Ausführungen Bezug genommen wird.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform des erfindungsgemäßen Zugverbunds, der mit dem erfindungsgemäßen Verfahren zur Zugbildung hergestellt wurde;
- Figur 2: eine schematische Darstellung eines Teils des Zugverbunds aus Figur 1;
- Figur 3: eine schematische Darstellung einer weiteren bevorzugten Ausführungsform des erfindungsgemäßen Zugverbunds, der mit dem erfindungsgemäßen Verfahren zur Zugbildung hergestellt wurde;
- Figur 4: eine schematische Darstellung eines Teils einer weiteren bevorzugten Ausführungsform des erfindungsgemäßen Zugverbunds, der mit dem erfindungsgemäßen Verfahren zur Zugbildung hergestellt wurde.

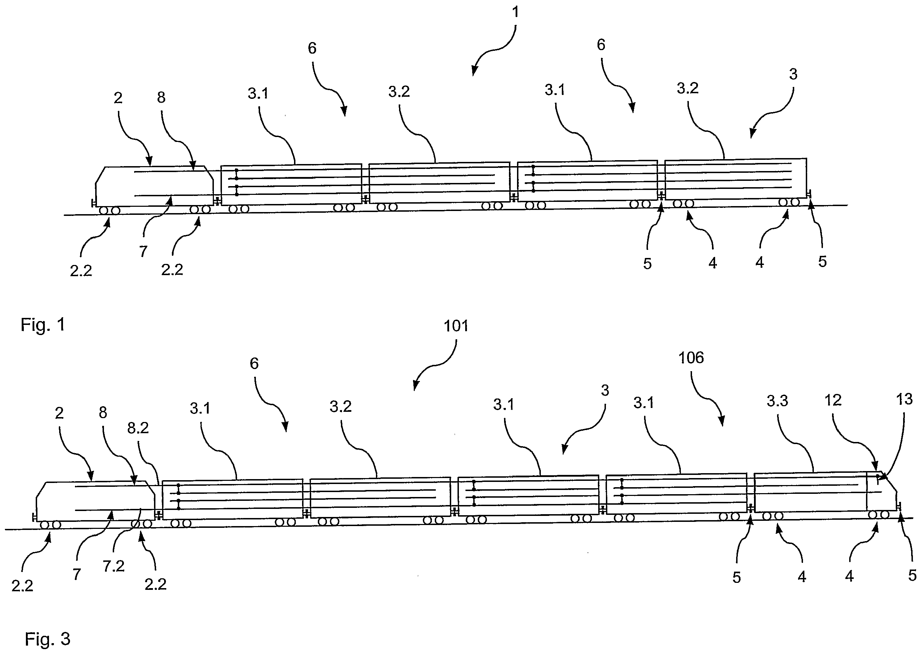

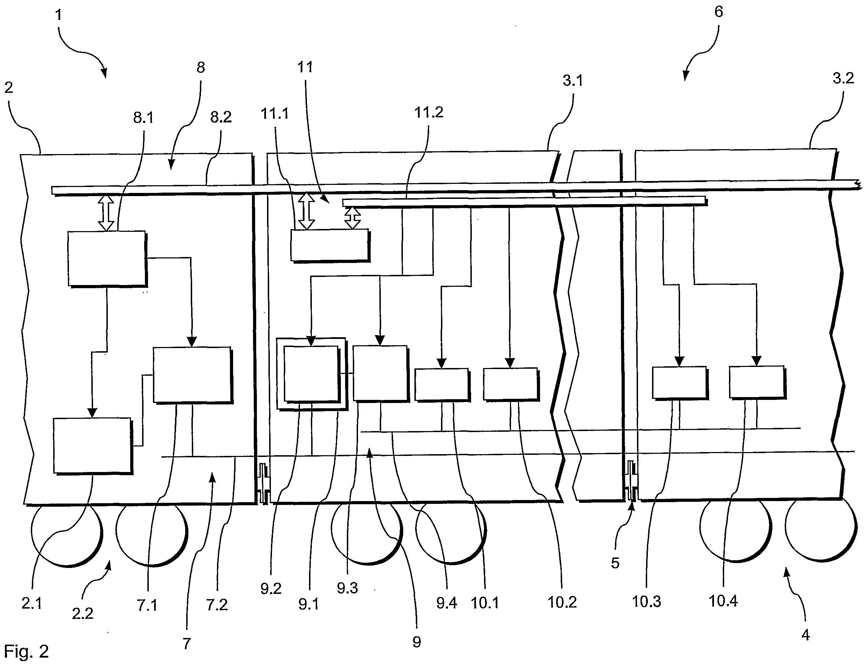

Im Folgenden wird zunächst unter Bezugnahme auf die Figuren 1 und 2 eine bevorzugte Ausführungsform des erfindungsgemäßen Zugverbunds 1 beschrieben, der mit dem erfindungsgemäßen Verfahren zur Zugbildung hergestellt wurde.

Der Zugverbund 1 umfasst eine Traktionseinheit in Form einer Lokomotive 2, an die eine Reihe von Einzelwagen 3 in Form von Reisezugwagen gekoppelt sind. Die Einzelwagen 3 weisen an ihren beiden Enden jeweils ein Fahrwerk 4 auf, sodass sie im Rangierbetrieb einzeln bzw. autonom verschoben werden können. Weiterhin weisen sie an ihren Enden je eine Kupplungseinrichtung 5 auf, über die sie mit anderen Einzelwagen 3 gekoppelt werden können.

Der Zugverbund 1 umfasst Einzelwagen unterschiedlicher Art. So sind im gezeigten Beispiel zwei erste Einzelwagen 3.1 und zwei zweite Einzelwagen 3.2 vorgesehen. Jeweils ein erster Einzelwagen 3.1 und ein zweiter Einzelwagen 3.2 sind benachbart zueinander angeordnet und zu einer ersten Wageneinheit 6 in Form einer Zweiwageneinheit gekoppelt. Wie im Folgenden noch näher erläutert wird, sind die ersten Einzelwagen 3.1 als autonom betreibbare Versorgungswagen ausgebildet, während die zweiten Einzelwagen 3.2 als nicht autonom betreibbare Ergänzungswagen ausgebildet sind.

Der Zugverbund 1 umfasst eine Zugenergieversorgungseinrichtung 7, über die der gesamte Zugverbund 1 mit Energie versorgt wird. Die Lokomotive 2 umfasst in diesem Ausführungsbeispiel ein dieselelektrisches Aggregat 7.1, das die zentrale Energiequelle der Zugenergieversorgungseinrichtung 7 darstellt. Dieses dieselelektrische Aggregat 7.1 speist zum einen den Traktionsantrieb 2.1 für die Triebfahrwerke 2.2 der Lokomotive 2. Weiterhin speist sie eine Zugsammelschiene 7.2, welche eine Zugenergieverteilungseinrichtung der Zugenergieversorgungseinrichtung 7 darstellt. Die Zugsammelschiene 7.2 erstreckt sich ausgehend von der Lokomotive 2 durch sämtliche Einzelwagen 3 hindurch.

In anderen, hier nicht näher ausgeführten Beispielen kann die Zugenergieversorgung über eine elektrische Lokomotive aus dem Fahrdraht geschehen. Dabei wird in der Regel die Energie bei Wechselstromversorgung über einen Transformator umgeformt und in die Zugsammelschiene gespeist. Bei Gleichstromspeisung kann die Zugsammelschiene über Schaltelemente direkt an den Fahrdraht geschaltet werden.

Der Zugverbund 1 umfasst weiterhin eine Zuginformationsversorgungseinrichtung 8, über die der gesamte Zugverbund 1 mit Steuerungsinformationen sowie gegebenenfalls Fahrgastinformationen etc. versorgt wird. Die Lokomotive 2 umfasst hierzu eine Zentralrechnereinrichtung 8.1, welche die zentrale Informationsquelle der Zuginformationsversorgungseinrichtung 8 darstellt. Die Zentralrechnereinrichtung 8.1 ist mit einer zentralen Informationsleitung 8.2 verbunden, die eine Zuginformationsverteilungseinrichtung der Zuginformationsversorgungseinrichtung 8 darstellt.

Diese zentrale Informationsleitung kann sowohl für konventionelle Informationsverarbeitung (Relais etc.) vorgesehen sein als auch für Bussignale. Im vorliegenden Beispiel ist sie ein Zugbus 8.2. Der Zugbus 8.2 erstreckt sich ausgehend von der Lokomotive 2 ebenfalls durch sämtliche Einzelwagen 3 hindurch:

Über das Zugbussystem 8.2 kann wie erwähnt auch Information zur Fahrgastinformation oder andere Informationen wie oben dargestellt geleitet werden. Es können dafür aber auch separate Leitungen vorgesehen sein.

Ähnliches gilt für die Bremssteuerung. Die Bremssteuerung geschieht zugübergreifend entweder über die pneumatische Luftleitung oder über konventionelle elektrische Signale, die in Leitungen übertragen werden. Gegebenenfalls können aber auch die Bremssignale über Bussysteme übertragen werden. Damit ist bei der pneumatischen Informationsübertragung beispielsweise die Bremsleitung (Hauptluftleitung) die Zuginformationsverteilungseinrichtung.

In den Versorgungswagen 3.1 sind sämtliche aufwändigen und/oder schweren Systeme bzw. Komponenten der Energieversorgung, wie beispielsweise Umrichter, Gleichrichter und Schaltelemente, der Fahrzeugbatterie, des Batterieladegeräts, der Steuerungselektronik, der Bremssteuerung und gegebenenfalls der Fahrgastinformation (alle oder auch Teile davon) eingebaut, die benötigt werden, um den Versorgungswagen 3.1 und den zugehörigen Ergänzungswagen 3.2 der jeweiligen ersten Wageneinheit 6 mit Energie und Informationen zu versorgen.

So umfasst der Versorgungswagen 3.1 jeweils eine Wagenenergieversorgungseinrichtung 9, über die der Versorgungswagen 3.1 und der zugehörige Ergänzungswagen 3.2 mit der im Normalbetrieb nötigen Energie für die Verbraucher 10.1 bis 10.4 versorgt wird. Diese Wagenenergieversorgungseinrichtung 9 umfasst eine Wagenenergiequelle 9.1, die aus der Zugsammelschiene 7.2 gespeist wird.

Die Wagenenergiequelle 9.1 umfasst eine Frequenzumrichtereinrichtung 9.2, die aus dem Spannungsniveau der Zugsammelschiene 7.2 alle betrieblich notwendigen Spannungen für die Verbraucher 10.1 bis 10.4 erzeugt (in der Regel: 24 V, 110 V DC, 400 V AC oder auch 680 V DC).

Eine mit der Wagenenergiequelle 9.1 verbundene Wagenenergieverteilungseinrichtung der Wagenenergieversorgungseinrichtung 9 übernimmt dann die Verteilung der Energie an die Verbraucher 10.1 bis 10.4. Die Wagenenergieverteilungseinrichtung umfasst eine mit der Frequenzumrichtereinrichtung 9.2 verbundene Energieverteilungseinrichtung 9.3 und eine aus dieser gespeiste Wagensammelschiene 9.4. Die Wagensammelschiene 9.4 erstreckt sich durch den Versorgungswagen 3.1 und über geeignete Kuppelvorrichtungen in den zugehörigen Ergänzungswagen 3.2 der jeweiligen ersten Wageneinheit 6. Aus ihr werden die Verbraucher 10.1 bis 10.4 des Versorgungswagens 3.1 und des Ergänzungswagens 3.2 gespeist.

Die Wagenenergiequelle 9.1 ist so dimensioniert, dass mit ihr die Verbraucher 10.1 bis 10.4 des Versorgungswagens 3.1 und des zugehörigen Ergänzungswagens 3.2 im Normalbetrieb versorgt werden können. In dem Versorgungswagen 3.1 ist auch die zur Wagenenergiequelle 9.1 gehörige Fahrzeugbatterie für den Versorgungswagen 3.1 und den zugehörigen Ergänzungswagen 3.2 untergebracht. Diese wird aus einem Batterieladegerät der Wagenenergiequelle 9.1 gespeist.

In dem Versorgungswagen 3.1 sind weiterhin auch die aufwändigen Informationsanbindungen untergebracht, die zur Steuerung des Zugverbunds 1, des Versorgungswagens 3.1 und des Ergänzungswagens 3.2 der jeweiligen ersten Wageneinheit 6, der Bremsen und gegebenenfalls zur Fahrgastinformation benötigt werden. Ebenso ist in dem Versorgungswagen 3.1 die Bremssteuerung für den Versorgungswagen 3.1 und den zugehörigen Ergänzungswagen 3.2 angeordnet.

Zur Informationsversorgung der Wageneinheit 6 ist eine Wageninformationsversorgungseinrichtung 11 der jeweiligen ersten Wageneinheit 6 mit dem Zugbus 8.2 verbunden. Diese Wageninformationsversorgungseinrichtung 11 umfasst jeweils eine Koppelbaugruppe in Form eines so genannten Gateways 11.1 und eine Wageninformationsverteilungseinrichtung in Form eines wagenbezogenen Bussystems 11.2.

Das Bussystem 11.2 ist ein so genannter Wagenbus, der z. B. als MVB (Multifunction Vehicle Bus) ausgeführt ist. An diesen Wagenbus 11.2 ist auch der jeweilige Wagensteuerrechner mit den zugehörigen Diagnoseeinrichtungen angeschlossen. An den Wagenbus 11.2 werden die zu steuernden Systeme des Versorgungswagens 3.1 und des zugehörigen Ergänzungswagens 3.2 angeschlossen (z.B. Bremse, Energieversorgung, Türen etc.) und über diesen gesteuert. Zu den zu steuernden Systemen gehören unter anderem die Verbraucher 10.1 bis 10.4.

Da auf beiden Bussystemen - also dem Zugbus 9.2 und dem Wagenbus 11.2 - unterschiedliche Informationen mit unterschiedlicher Diagnose- und Steuerungstiefe übertragen werden, können die zu steuernden Systeme des Versorgungswagens 3.1 und des zugehörigen Ergänzungswagens 3.2 nicht direkt an den Zugbus 9.2 angeschlossen werden. Die Wagenbussysteme 11.2 können aufgrund der höheren Datenübertragungsraten innerhalb eines Fahrzeuges zur Steuerung nicht über einen langen Zug mit bis zu sechzehn Einzelwagen ausgedehnt werden. Außerdem ist die Zahl der Knoten, an denen Systeme an den Bus angeschlossen werden begrenzt und reicht nicht für einen langen Zug aus. Die Erfindung schafft hier durch entsprechend kurze Wagenbussysteme 11.2 Abhilfe, die sich nur über wenige Einzelwagen - im vorliegenden Beispiel zwei Wagen - erstrecken.

Da der Versorgungswagen 3.1 alle für die Energieversorgung und die Informationsversorgung des Versorgungswagens 3.1 und des zugehörigen Ergänzungswagens 3.2 erforderlichen Komponenten enthält, kann er auch alleine, d. h. ohne einen damit gekoppelten Ergänzungswagens 3.2 betrieben werden. Die Versorgungswagen 3.1 stellen somit autonom betreibbare Einzelwagen dar.

Der Ergänzungswagen 3.2 kann jedoch nicht ohne einen mit ihm gekoppelten Versorgungswagen 3.1 im Normalbetrieb betrieben werden. Er wird Im Normalbetrieb im Wesentlichen vollständig von dem zugehörigen Versorgungswagen 3.1 mit Energie und Information versorgt. Es kann lediglich vorgesehen sein, dass er aus Sicherheitsgründen Notbetriebseinrichtungen umfasst, die im Notfall Energie und Information für sicherheitsrelevante Funktionen, wie beispielsweise Bremsen etc. zur Verfügung stellen. Die Ergänzungswagen 3.2 stellen demgemäß nicht autonom betreibbare Einzelwagen dar.

Im vorliegenden Beispiel bilden der Versorgungswagens 3.1 und der zugehörige Ergänzungswagen 3.2 eine Zweiwageneinheit 6. Es versteht sich jedoch, dass bei anderen Varianten der Erfindung auch vorgesehen sein kann, dass der Versorgungswagen mit mehreren zweiten Einzelwagen, für deren Versorgung er ausgelegt ist, zu einer ersten Wageneinheit gekoppelt wird.

Die vorbeschriebene Gestaltung und Kopplung der Einzelwagen 3 führt zum einen zu einer deutlichen Verringerung der Gesamtmasse des Zugverbunds 1. So kann die Energieversorgungseinrichtung 9.1 des jeweiligen Versorgungswagens 3.1, wie oben bereits beschrieben wurde, so ausgeführt werden, dass ihre Masse und ihre Herstellungskosten deutlich geringer sind als die Gesamtmasse und die Herstellungskosten der bekannten Einzelenergieversorgungseinrichtungen bekannter Einzelwagen. Diese Massenreduktion macht sich wie oben bereits beschrieben wurde sowohl bei der Herstellung der Einzelwagen 3 als auch im Betrieb des Zugverbunds 1 vorteilhaft bemerkbar.

Weiterhin reduziert sich auch der Aufwand für die Anbindung der Einzelwagen 3 an die Zugenergieversorgung und die Zugsteuerung deutlich. So muss nur jeder Versorgungswagen 3.1 die erforderlichen aufwändigen Schnittstellen enthalten, während die Ergänzungswagen 3.2 deutlich einfachere Schnittstellen für die Anbindung an den Versorgungswagen umfassen müssen. Auch die Anzahl der erforderlichen Steuerrechner für die Wagensteuerung, die Informationssysteme und ggf. auch für die Bremseinrichtungen kann deutlich reduziert werden, da sie jeweils nur in dem Versorgungswagen 3.1 vorzusehen sind.

Insgesamt nimmt die gesamte Ausrüstung für den Versorgungswagen 3.1 und den Ergänzungswagen 3.2 weniger Bauraum ein als die gesamte Ausrüstung für zwei der bekannten Einzelwagen. Insbesondere bei niederflurigen Wagen ist der Einbau der Ausrüstung in Schränken im Fahrgastraum günstiger zu gestalten. So beschränkt sich ein Großteil der Einbauten auf den Versorgungswagen 3.1, während im Ergänzungswagen 3.2 kaum Einbauten vorzunehmen sind. Wegen der beschriebenen insgesamt geringeren Anzahl und Masse der Ausrüstungen und damit dem insgesamt geringeren erforderlichen Bauraum für die Ausrüstungen der ersten Wageneinheit 6 steht insgesamt mehr Nutzfläche in der Wageneinheit 6 zur Verfügung als in einer Einheit aus zwei bekannten Einzelwagen.

Der Zugverbund 1 ist ein Verbund mit vier Wagen. Es versteht sich, dass er durch Ankopplung weiterer Zweiwageneinheiten 6 zu einem Zug mit beliebiger geradzahliger Wagenanzahl verlängert werden kann. Ebenso versteht es sich, dass eine der Zweiwageneinheiten 6 auch abgekoppelt werden kann, sodass dann ein Verbund mit lediglich zwei Wagen entsteht.

Weiterhin versteht es sich, dass die jeweilige Zweiwageneinheit 6 an ihren Enden mit UIC konformen Schnittstellen versehen sein kann. Die Zweiwageneinheit 6 ist dann wie ein herkömmlicher autonomer Einzelwagen mit beliebigen anderen Einzelwagen koppelbar. Nach außen hin verhält sich die Zweiwageneinheit 6 dann mit anderen Worten wie ein herkömmlicher autonomer Einzelwagen, allerdings mit deutlich höherer Transportkapazität. Wegen der symmetrischen Schnittstellen kann die Zweiwageneinheit 6 nach außen hin dann im Übrigen auch gedreht eingesetzt werden.

Im Folgenden wird unter Bezugnahme auf Figur 3 eine weitere bevorzugte Ausführungsform des erfindungsgemäßen Zugverbunds 101 beschrieben, der mit dem erfindungsgemäßen Verfahren zur Zugbildung hergestellt wurde. Dieser Zugverbund 101 gleicht in Aufbau und Funktionsweise grundsätzlich demjenigen aus den Figuren 1 und 2, sodass hier lediglich auf die Unterschiede eingegangen werden soll. Insbesondere sind identische Komponenten mit identischen Bezugszeichen versehen.

Ein Unterschied zur Ausführung aus den Figuren 1 und 2 besteht darin, dass der Zugverbund 101 aus einer ungeradzahligen Wagenanzahl besteht. Dies wird dadurch erreicht, dass in den Zugverbund ein Versorgungswagen 3.1 alleine, d. h. ohne zugeordneten Ergänzungswagen in den Zugverbund 101 eingekoppelt ist. Dies ist wegen der autonomen Betreibbarkeit der Versorgungswagen 3.1 möglich und bringt den Vorteil mit sich, dass neben Zügen mit beliebiger geradzahliger Wagenanzahl auch Züge mit beliebiger ungeradzahliger Wagenanzahl bis hin zu den betrieblichen Maximalzahlen gebildet werden können.

Ein weiterer Unterschied zur Ausführung aus den Figuren 1 und 2 besteht darin, dass bei der hinteren Wageneinheit 106 der nicht autonom betreibbare zweite Einzelwagen bzw. Ergänzungswagen 3.3 als Steuerwagen mit einem Führerstand 12 ausgebildet ist, um einen Wendezugbetrieb zu ermöglichen. Der Versorgungswagen 3.1 und der zugeordnete Steuerwagen 3.3 bilden somit eine zweite Wageneinheit in Form einer Steuerwageneinheit 106.

Der Unterschied des als Steuerwagen ausgebildeten Ergänzungswagens 3.3 zu den Ergänzungswagen 3.2 besteht dabei unter anderem darin, dass zum Anschluss der Steuereinrichtungen des Führerstands 12 im Bereich des Führerstands 12 eine unmittelbare Anbindung 13 an den Zugbus 8.2 vorgesehen ist. Es sind andere hier nicht dargestellte Ausführungsformen denkbar, bei denen der Führerstand an den Wagenbus angeschlossen ist.

Ein weiterer Unterschied des Steuerwagens 3.3 zu den Ergänzungswagen 3.2 besteht darin, dass die Zugsammelschiene 7.2 in ihm nicht fortgeführt ist. Es versteht sich jedoch, dass die Zugsammelschiene bei anderen Varianten der Erfindung auch durch einen solchen Steuerwagen hindurch fortgeführt sein kann. Weiterhin versteht es sich, dass bei anderen Varianten der Erfindung auch ein Versorgungswagen als Steuerwagen ausgebildet sein kann.

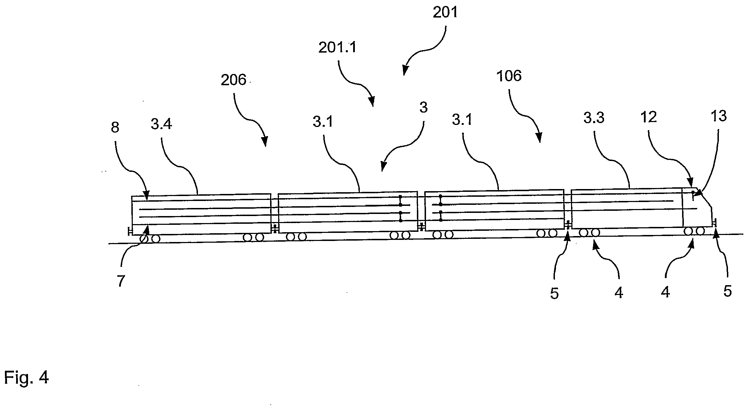

Im Folgenden wird unter Bezugnahme auf Figur 4 eine weitere bevorzugte Ausführungsform des erfindungsgemäßen Zugverbunds 201 beschrieben, der mit dem erfindungsgemäßen Verfahren zur Zugbildung hergestellt wurde. Dieser Zugverbund 201 gleicht in Aufbau und Funktionsweise grundsätzlich demjenigen aus den Figuren 1 und 2 bzw. demjenigen aus Figur 3, sodass hier lediglich auf die Unterschiede eingegangen werden soll. Insbesondere sind identische Komponenten mit identischen Bezugszeichen versehen.

Wie Figur 4 zu entnehmen ist, die ein Zugsegment 201.1 des Zugverbunds 201 zeigt, besteht der Unterschied darin, dass das Zugsegment 201.1 neben einer zweiten Wageneinheit bzw. Steuerwageneinheit 106, wie sie im Zusammenhang mit Figur 3 beschrieben wurde, eine dritten Wageneinheit in Form einer Anschlusswageneinheit 206 umfasst. Diese Anschlusswageneinheit 206 umfasst einen Versorgungswagen 3.1 und einen nicht autonom betreibbaren zweiten Einzelwagen bzw. Ergänzungswagen 3.4 in Form eines Anschlusswagens. Der Anschlusswagen 3.4 wird benötigt, wenn innerhalb des erfingungsgemäßen Zugverbundes andere Verbindungen zwischen den Wagen gewählt werden als an den Enden zu üblichen konventionellen oder UIC konformen Wagen. Das kann der Fall sein, wenn innerhalb des Zugverbundes Mittelpufferkupplungen verwendet werden, an den Enden aber Zughaken und Seitenpuffer erforderlich sind. Es versteht sich, dass auch ein Versorgungswagen als Anschlusswagen ausgebildet sein kann.

Der Anschlusswagen 3.4 kann dabei niederflurig ausgebildet sein und den Anschluss von hochflurigen konventionellen Wagen zu entsprechenden anderen niederflurigen Wagen eine erfindungsgemäßen Zugverbundes herstellen.

Anschlusswagen werden immer dann verwendet, wenn die Schnittstellen innerhalb des erfindungsgemäßen Zugverbundes anders sind, als die konventioneller Wagen oder Traktionseinheiten, die mit dem Zugverbund gekuppelt werden sollen. Das ist beispielsweise der Fall, wenn die elektrischen Schnittstellen wie beispielsweise die Spannung am Ende des Zugverbundes UIC konform sein sollen, es jedoch innerhalb einer Wageneinheit oder des Zugverbundes nicht sind. Auch mechanische Schnittstellen können unterschiedlich sein, wie beispielsweise die Kupplung, deren Höhe oder das Fußbodenniveau. Es versteht sich, dass ein Anschlusswagen als Steuerwagen ausgebildet sein kann.

Werden die Schnittstellen zwischen einzelnen Wageneinheiten wie bei konventionellen Wagen oder Traktionseinheiten ausgeführt, können diese direkt mit solchen gekuppelt und im Normalbetrieb eingesetzt werden. Es können somit längere Zugverbunde aus erfindungsgemäßen ,Wagen und Wageneinheiten mit konventionellen Wagen und/oder Traktionseinheiten gebildet werden.

Hierbei versteht es sich, dass das Zugsegment 201.1 durch Zwischenschaltung von einer oder mehreren, Mittelwageneinheiten bildenden ersten Wageneinheiten 6 (siehe Figuren 1 und 3) oder von einzelnen Versorgungswagen 3.1 (siehe Figur 3) auf beliebige geradzahlige oder ungeradzahlige Wagenanzahlen verlängert werden kann.

Die vorliegende Erfindung wurde vorstehend anhand von Beispielen beschrieben, bei denen eine Diesel-Lokomotive als Traktionseinheit verwendet wurde. Es versteht sich jedoch, dass bei anderen Varianten der Erfindung auch andere Traktionseinheiten verwendet werden können.

Insbesondere bei der Kopplung der erfindungsgemäßen Wageneinheiten bzw. Versorgungswagen über ihre UIC-konformen oder konventionellen Schnittstellen der Wagen oder Wageneinheiten selbst oder eines entsprechenden Anschlusswagens mit nicht erfindungsgemäßen Wagen bzw. Zugsegmenten und/oder Traktionseinheiten ist es möglich, flexibel beliebige Züge zu bilden.

Die Reihung der Wagen oder Wageneinheiten im Zugverbund kann wie hier dargestellt sein, aber auch beliebig oder spiegelbildlich gedreht. Einzelne autarke Versorgungswagen können an jeder Stelle im Zugverbund eingereiht werden.

## Patentansprüche

1. Verfahren zur Zugbildung aus Einzelwagen ohne Traktionsausrüstung, insbesondere Reisezugwagen, bei dem
- wenigstens eine Traktionseinheit (2) mit wenigstens einem autonom betreibbaren ersten Einzelwagen (3.1) zu einem Zugverbund (1; 101; 201) gekoppelt wird,
- wobei als erster Einzelwagen ein Versorgungswagen (3.1) verwendet wird, der zur Übernahme im Wesentlichen der gesamten Energieversorgung wenigstens eines nicht autonom betreibbaren zweiten Einzelwagens (3.2, 3.3, 3.4) im Normalbetrieb ausgebildet ist,
**dadurch gekennzeichnet, dass**
- der Versorgungswagen (3.1) zur Übernahme im Wesentlichen der gesamten Informationsversorgung des wenigstens einen nicht autonom betreibbaren zweiten Einzelwagens (3.2, 3.3, 3.4) im Normalbetrieb ausgebildet ist,
- eine Zuginformationsversorgungseinrichtung (8) vorgesehen ist, die eine Zuginformationsverteilungseinrichtung (8.2) umfasst, die ein Zugbus ist, und
- der Versorgungswagen (3.1) eine erste Wageninformationsversorgungseinrichtung (11) umfasst, die zur Informationsversorgung des Versorgungswagens (3.1) mit der Zuginformationsverteilungseinrichtung (8.2) verbunden wird,
- der Versorgungswagen (3.1) mit wenigstens einem zweiten Einzelwagen (3.2) zu einer ersten Wageneinheit (6) gekoppelt wird, wobei der zweite Einzelwagen als nicht autonom betreibbarer Ergänzungswagen (3.2) ausgebildet ist,
- die erste Wageninformationsversorgungseinrichtung (11) zur Informationsversorgung des Versorgungswagens (3.1) und des Ergänzungswagens (3.2) ausgebildet ist und eine Wageninformationsverteilungseinrichtung (11.2) umfasst, die ein Wagenbus ist, und
- der Ergänzungswagen (3.2) zur Informationsversorgung mit der Wageninformationsverteilungseinrichtung (11.2) verbunden wird.

2. Verfahren nach Anspruch 1, **dadurch gekennzeichnet, dass** der Versorgungswagen (3.1) zur Energieversorgung und Informationsversorgung genau eines nicht autonom betreibbaren zweiten Einzelwagens (3.2, 3.3, 3.4) im Normalbetrieb ausgebildet ist.

3. Verfahren nach Anspruch 1 oder 2 , **dadurch gekennzeichnet, dass** wenigstens ein Versorgungswagen (3.1) mit wenigstens einem nicht autonom betreibbaren zweiten Einzelwagen (3.2) zu wenigstens einer ersten Wageneinheit (6) gekoppelt wird, wobei der zweite Einzelwagen (3.2) als Ergänzungswagen derart ausgebildet ist, dass im Normalbetrieb im Wesentlichen seine gesamte Energieversorgung und Informationsversorgung durch den Versorgungswagen (3.1) erfolgt.

4. Verfahren nach Anspruch 3, **dadurch gekennzeichnet, dass** die erste Wageneinheit als Zweiwageneinheit (6) mit einem Versorgungswagen (3.1) und einem Ergänzungswagen (3.2) ausgebildet ist.

5. Verfahren nach Anspruch 3 oder 4, **dadurch gekennzeichnet, dass** ein Zugverbund (1) gebildet wird, der eine Mehrzahl von ersten Wageneinheiten (6) umfasst.

6. Verfahren nach einem der Ansprüche 3 bis 5, **dadurch gekennzeichnet, dass** ein Zugverbund (101) gebildet wird, der wenigstens einen nicht in einer ersten Wageneinheit (6) eingebundenen Versorgungswagen (3.1) umfasst.

7. Verfahren nach einem der vorhergehenden Ansprüche, **dadurch gekennzeichnet, dass** ein Zugverbund gebildet wird, der wenigstens einen Versorgungswagen umfasst, der als Steuerwagen oder als Anschlusswagen ausgebildet ist.

8. Verfahren nach einem der vorhergehenden Ansprüche, **dadurch gekennzeichnet, dass**
- ein Versorgungswagen (3.1) mit einem zweiten Einzelwagen (3.3) zu einer zweiten Wageneinheit (106) gekoppelt wird, wobei der zweite Einzelwagen als nicht autonom betreibbarer Steuerwagen (3.3) ausgebildet ist,
und/oder
- ein Versorgungswagen (3.1) mit einem zweiten Einzelwagen (3.4) zu einer dritten Wageneinheit (206) gekoppelt wird, wobei der zweite Einzelwagen als nicht autonom betreibbarer Anschlusswagen (3.4) ausgebildet ist.

9. Zugverbund aus Einzelwagen ohne Traktionsausrüstung, insbesondere Reisezugwagen, mit
- wenigstens einer Traktionseinheit (2) und wenigstens einem mit der Traktionseinheit (2) gekoppelten autonom betreibbaren ersten Einzelwagen (3.1),
- wobei der erste Einzelwagen ein Versorgungswagen (3.1) ist, der zur Übernahme im Wesentlichen der gesamten Energieversorgung wenigstens eines nicht autonom betreibbaren zweiten Einzelwagens (3.2, 3.3, 3.4) im Normalbetrieb ausgebildet ist,
**dadurch gekennzeichnet, dass**
- der Versorgungswagen (3.1) zur Übernahme im Wesentlichen der gesamten Informationsversorgung des wenigstens einen nicht autonom betreibbaren zweiten Einzelwagens (3.2, 3.3, 3.4) im Normalbetrieb ausgebildet ist,
- eine Zuginformationsversorgungseinrichtung (8) vorgesehen ist, die eine Zuginformationsverteilungseinrichtung (8.2) umfasst, die ein Zugbus ist, und
- der Versorgungswagen (3.1) eine erste Wageninformationsversorgungseinrichtung (11) umfasst, die zur Informationsversorgung des Versorgungswagens (3.1) mit der Zuginformationsverteilungseinrichtung (8.2) verbunden ist,
- der Versorgungswagen (3.1) mit wenigstens einem zweiten Einzelwagen (3.2) zu einer ersten Wageneinheit (6) gekoppelt ist, wobei der zweite Einzelwagen als nicht autonom betreibbarer Ergänzungswagen (3.2) ausgebildet ist,
- die erste Wageninformationsversorgungseinrichtung (11) zur Informationsversorgung des Versorgungswagens (3.1) und des Ergänzungswagens (3.2) ausgebildet ist und eine Wageninformationsverteilungseinrichtung (11.2) umfasst, die ein Wagenbus ist, und
- der Ergänzungswagen (3.2) zur Informationsversorgung mit der Wageninformationsverteilungseinrichtung (11.2) verbunden ist.

10. Zugverbund nach Anspruch 9, **dadurch gekennzeichnet, dass** der Versorgungswagen (3.1) zur Energieversorgung und Informationsversorgung genau eines nicht autonom betreibbaren zweiten Einzelwagens (3.2, 3.3, 3.4) im Normalbetrieb ausgebildet ist.

11. Zugverbund nach Anspruch 9 oder 10, **dadurch gekennzeichnet, dass** wenigstens ein Versorgungswagen (3.1) mit wenigstens einem nicht autonom betreibbaren zweiten Einzelwagen (3.2) zu wenigstens einer ersten Wageneinheit (6) gekoppelt ist, wobei der zweite Einzelwagen als Ergänzungswagen (3.2) derart ausgebildet ist, dass im Normalbetrieb im Wesentlichen seine gesamte Energieversorgung und Informationsversorgung durch den Versorgungswagen (3.1) erfolgt.

12. Zugverbund nach Anspruch 11, **dadurch gekennzeichnet, dass** die erste Wageneinheit (6) als Zweiwageneinheit mit einem Versorgungswagen (3.1) und einem Ergänzungswagen (3.2) ausgebildet ist.

13. Zugverbund nach Anspruch 11 oder 12, **dadurch gekennzeichnet, dass** der Zugverbund (1) eine Mehrzahl von ersten Wageneinheiten (6) umfasst.

14. Zugverbund nach einem der Ansprüche 11 bis 13, **dadurch gekennzeichnet, dass** der Zugverbund (101) wenigstens einen nicht in einer ersten Wageneinheit (6) eingebundenen Versorgungswagen (3.1) umfasst.

15. Zugverbund nach einem der Ansprüche 9 bis 14, **dadurch gekennzeichnet, dass** ein Versorgungswagen als Steuerwagen oder als Anschlusswagen ausgebildet ist.

16. Zugverbund nach einem der Ansprüche 9 bis 15, **dadurch gekennzeichnet, dass**
- ein Versorgungswagen (3.1) mit einem zweiten Einzelwagen (3.3) zu einer zweiten Wageneinheit (106) gekoppelt ist, wobei der zweite Einzelwagen als nicht autonom betreibbarer Steuerwagen (3.3) ausgebildet ist.
und/oder
- ein Versorgungswagen (3.1) mit einem zweiten Einzelwagen (3.4) zu einer dritten Wageneinheit (206) gekoppelt ist, wobei der zweite Einzelwagen als nicht autonom betreibbarer Anschlusswagen (3.4) ausgebildet ist.

17. Zugverbund nach einem der Ansprüche 9 bis 16, **dadurch gekennzeichnet, dass** der erste Einzelwagen (3.1) zur Energieversorgung und/oder Informationsversorgung durch die Traktionseinheit (2) ausgebildet ist.

18. Zugverbund nach einem der Ansprüche 9 bis 17, **dadurch gekennzeichnet, dass**
- eine Zugenergieversorgungseinrichtung (7) vorgesehen ist, die eine Zugenergieverteilungseinrichtung (7.2) umfasst, die insbesondere eine Zugsammelschiene umfasst, und
- der Versorgungswagen (3.1) eine erste Wagenenergieversorgungseinrichtung (9) umfasst, die zur Energieversorgung des Versorgungswagens (3.1) mit der Zugenergieverteilungseinrichtung (7.2) verbunden ist.

19. Zugverbund nach einem der Ansprüche 9 bis 18, **dadurch gekennzeichnet, dass**
- wenigstens ein Versorgungswagen (3.1) mit wenigstens einem zweiten Einzelwagen (3.2) zu wenigstens einer ersten Wageneinheit (6) gekoppelt ist, wobei der zweite Einzelwagen (3.2) als nicht autonom betreibbarer Ergänzungswagen ausgebildet ist,
- der Versorgungswagen (3.1) eine erste Wagenenergieversorgungseinrichtung (9) umfasst, die zur Energieversorgung des Versorgungswagens (3.1) und des Ergänzungswagens (3.2) ausgebildet ist und eine Wagenenergieverteilungseinrichtung (9.3, 9.4) umfasst, die insbesondere eine Wagensammeischiene (9.4) umfasst, und
- der Ergänzungswagen (3.2) zur Energieversorgung mit der Wagenenergieverteilungseinrichtung (9.3, 9.4) verbunden ist.

20. Zugverbund nach einem der Ansprüche 9 bis 19, **dadurch gekennzeichnet, dass** die Traktionseinheit eine Lokomotive (2) oder ein Triebwagen ist.

21. Einzelwagen ohne Traktionsausrüstung, insbesondere Reisezugwagen, **dadurch gekennzeichnet, dass** er als autonom betreibbarer erster Einzelwagen (3.1) eines Zugverbunds (1; 101; 201) nach einem der Ansprüche 9 bis 20 ausgebildet ist.

22. Einzelwagen ohne Traktionsausrüstung, insbesondere Reisezugwagen, **dadurch gekennzeichnet, dass** er als nicht autonom betreibbarer zweiter Einzelwagen (3.2, 3.3, 3.4) eines Zugverbunds (1; 101; 201) nach einem der Ansprüche 9 bis 20 ausgebildet ist.

23. Wageneinheit aus einem Einzelwagen nach Anspruch 21 und wenigstens einem Einzelwagen nach Anspruch 22.

## Claims

1. Method for train formation from single wagons without traction equipment, in particular passenger wagons, in which
- at least one traction unit (2) is coupled to at least one autonomously operable first single wagon (3.1) to form a train set (1, 101, 201),
- wherein as said first single wagon a supply wagon (3.1) is used, which is configured to take over, in normal operation, substantially the entire energy supply of at least one non-autonomously operable second single wagon (3.2, 3.3, 3.4),
**characterized in that**,
- said supply wagon (3.1) is configured to take over substantially the entire information supply of said at least one non-autonomously operable second single wagon (3.2, 3.3, 3.4) in normal operation,
- a train information supply device (8) is provided, which comprises a train information distribution device (8.2) which is a train bus, and
- said supply wagon (3.1) comprises a first wagon information supply device (11), which is connected with said train information distribution device (8.2) for information supply of said supply wagon (3.1),
- said supply wagon (3.1) is coupled with at least one second single wagon (3.2) to form at least one first wagon unit (6), wherein said second single wagon is configured as non-autonomously operable supplementary wagon (3.2),
- said first wagon information supply device (11)is configured for the information supply of said supply wagon (3.1) and said supplementary wagon (3.2) and comprises a wagon information distribution device (11.2) which is a wagon bus, and
- said supplementary wagon (3.2) is connected with said wagon information distribution device (11.2) for information supply.

2. Method according to claim 1, **characterized in that**, said supply wagon (3.1) is configured for the energy supply and the information supply of exactly one non-autonomously operable second single wagon (3.2, 3.3, 3.4) in normal operation.

3. Method according to claim 1 or 2, **characterized in that**, at least one supply wagon (3.1) is coupled with at least one non-autonomously operable second single wagon (3.2) to form at least one first wagon unit (6), wherein said second single wagon (3.2) is configured as a supplementary wagon such that in normal operation essentially its entire energy supply and information supply is carried out by said supply wagon (3.1).

4. Method according to claim 3, **characterized in that**, said first wagon unit is configured as a two-wagon unit (6) with one supply wagon (3.1) and one supplementary wagon (3.2).

5. Method according to claim 3 or 4, **characterized in that** a train set (1) is formed, which comprises a plurality of first wagon units (6).

6. Method according to one of claims 3 to 5, **characterized in that**, a train set (1) is formed which comprises at least one supply wagon (3.1) which is not integrated in a first wagon unit (6).

7. Method according to one of the preceding claims, **characterized in that** a train set (1) is formed, which comprises at least one supply wagon, which is configured as a control wagon or as a connecting wagon.

8. Method according to one of the preceding claims, **characterized in that**,
- a supply wagon (3.1) is coupled with a second single wagon (3.3) to a second wagon unit (106), wherein said second single wagon is configured as non-autonomously operable control wagon (3.3),
and/or
- a supply wagon (3.1) is coupled with a second single wagon (3.4) to a third wagon unit (206), wherein said second single wagon is configured as non-autonomously operable connecting wagon (3.4).

9. Train set formed from single wagons without traction equipment, in particular passenger wagons, with
- at least one traction unit (2) and at least one autonomously operable first single wagon (3.1) that is coupled to the traction unit (2),
- wherein said first single wagon is a supply wagon (3.1) which is configured to take over substantially the entire energy supply of at least one non-autonomously operable second single wagon (3.2, 3.3, 3.4) in normal operation,
**characterized in that**,
- said supply wagon (3.1) is configured to take over substantially the entire information supply of said at least one non-autonomously operable second single wagon (3.2, 3.3, 3.4) in normal operation,
- a train information supply device (8) is provided, which comprises a train information distribution device (8.2) which is a train bus, and
- said supply wagon (3.1) comprises a first wagon information supply device (11), which is connected with said train information distribution device (8.2) for information supply of said supply wagon (3.1),
- said supply wagon (3.1) is coupled with at least one second single wagon (3.2) to form at least one first wagon unit (6), wherein said second single wagon is configured as non-autonomously operable supplementary wagon (3.2),
- said first wagon information supply device (11)is configured for the information supply of said supply wagon (3.1) and said supplementary wagon (3.2) and comprises a wagon information distribution device (11.2) which is a wagon bus, and
- said supplementary wagon (3.2) is connected with said wagon information distribution device (11.2) for information supply.

10. Train set according to claim 9, **characterized in that**, said supply wagon (3.1) is configured for the energy supply and the information supply of exactly one non-autonomously operable second single wagon (3.2, 3.3, 3.4) in normal operation.

11. Train set according to claim 9 or 10, **characterized in that**, at least one supply wagon (3.1) is coupled with at least one non-autonomously operable second single wagon (3.2) to form at least one first wagon unit (6), wherein said second single wagon is configured as a supplementary wagon (3.2) such that in normal operation essentially its entire energy supply and information supply is carried out by said supply wagon (3.1).

12. Train set according to claim 11, **characterized in that**, said first wagon unit (6) is configured as a two-wagon unit with one supply wagon (3.1) and one supplementary wagon (3.2).

13. Train set according to claim 11 or 12, **characterized in that** said train set (1) comprises a plurality of first wagon units (6).

14. Train set according to one of claims 11 to 13, **characterized in that**, said train set (101) comprises at least one supply wagon (3.1) which is not integrated in a first wagon unit (6).

15. Train set according to one of claims 9 to 14, **characterized in that** a supply wagon is configured as a control wagon or as a connecting wagon.

16. Train set according to one of claims 9 to 15, **characterized in that**,
- a supply wagon (3.1) is coupled with a second single wagon (3.3) to a second wagon unit (106), wherein said second single wagon is configured as non-autonomously operable control wagon (3.3),
and/or
- a supply wagon (3.1) is coupled with a second single wagon (3.4) to a third wagon unit (206), wherein said second single wagon is configured as non-autonomously operable connecting wagon (3.4).

17. Train set according to one of claims 9 to 16, **characterized in that**, said first single wagon (3.1) is configured for energy supply and/or information supply by the traction unit (2).

18. Train set according to one of claims 9 to 17, **characterized in that**,
- a train energy supply device (7) is provided, which comprises a train energy distribution device (7.2), said train energy distribution device (7.2) in particular comprising a train power supply line, and
- said supply wagon (3.1) comprises a first wagon energy supply device (9), which is connected with said train energy distribution device (7.2) for energy supply.

19. Train set according to one of claims 9 to 18, **characterized in that**,
- at least one supply wagon (3.1) is coupled with at least one second single wagon (3.2) to at least one first wagon unit (6), wherein said second single wagon (3.2) is configured as non-autonomously operable supplementary wagon,
- said supply wagon (3.1) comprises a first wagon energy supply device (9), which is configured for the energy supply of said supply wagon (3.1) and said supplementary wagon (3.2) and comprises a wagon energy distribution device (9.3, 9.4), said wagon energy distribution device (9.3, 9.4) in particular comprising a wagon power supply line (9.4), and
- said supplementary wagon (3.2) is connected with said wagon energy distribution device (9.3, 9.4) for energy supply.

20. Train set according to one of claims 9 to 19, **characterized in that**, said traction unit is a locomotive (2) or a motor wagon.

21. Single wagon without traction equipment, in particular passenger wagon, **characterized in that**, said single wagon is configured as autonomously operable first single wagon (3.1) of a train set (1, 101, 201) according to one of claims 9 to 20.

22. Single wagon without traction equipment, in particular passenger wagon, **characterized in that**, said single wagon is configured as non-autonomously operable second single wagon (3.2, 3.3, 3.4) of a train set (1, 101, 201) according to one of claims 9 to 20.

23. Wagon unit formed of one single wagon according to claim 21 and at least one single wagon according to claim 22.

## Revendications

1. Procédé de formation de trains à partir de wagons singuliers sans équipement de traction, en particulier de wagons passagers, dans lequel
- au moins une unité de traction (2) est couplée à au moins un premier wagon singulier (3.1) à fonctionnement autonome pour former une rame ferroviaire (1; 101; 201),
- un wagon d'approvisionnement (3.1) étant utilisé comme le premier wagon singulier qui est configuré pour prendre en charge, en fonctionnement normal, essentiellement la totalité de l'approvisionnement en énergie d'au moins un deuxième wagon singulier à fonctionnement non autonome (3.2, 3.3, 3.4),
**caractérisé en ce que**
- ledit wagon d'approvisionnement (3.1) est configuré pour prendre en charge, en fonctionnement normal, essentiellement la totalité de l'approvisionnement en informations dudit au moins un deuxième wagon singulier à fonctionnement non autonome (3.2, 3.3, 3.4),
- il est prévu un dispositif d'approvisionnement d'informations de train (8) comprenant un dispositif de distribution d'informations de train (8.2), qui est un bus de train, et
- le wagon d'approvisionnement (3.1) comprend un premier dispositif d'approvisionnement d'informations de wagon (11) qui est raccordé au dispositif de distribution d'informations de train (8.2) pour l'approvisionnement en informations du wagon d'approvisionnement (3.1),
- ledit wagon d'approvisionnement (3.1) est couplé avec au moins un deuxième wagon singulier (3.2) pour former une première unité de wagon (6), le deuxième wagon singulier étant conçu comme un wagon supplémentaire à fonctionnement non autonome (3.2),
- ledit premier dispositif d'approvisionnement en information de wagon (11) est conçu pour approvisionner le wagon d'approvisionnement (3.1) et le wagon supplémentaire (3.2) en information et comprend un dispositif de distribution d'information du wagon (11.2) qui est un bus de wagon (9.4), et
- le wagon supplémentaire (3.2) est raccordé au dispositif de distribution d'information du wagon (11.2) pour l'approvisionnement en information.

2. Procédé selon la revendication 1, **caractérisé en ce que** le wagon d'approvisionnement (3.1) est configuré pour l'approvisionnement en énergie et en informations d'exactement un second wagon singulier à fonctionnement non autonome (3.2, 3.3, 3.4) en fonctionnement normal.

3. Procédé selon la revendication 1 ou 2, **caractérisé en ce qu'**au moins un wagon d'approvisionnement (3.1) est couplé à au moins un second wagon singulier à fonctionnement non autonome (3.2) pour former au moins une première unité de wagon (6), le second wagon (3.2) étant conçu comme un wagon supplémentaire de manière que, en fonctionnement normal, essentiellement la totalité de son alimentation en énergie et en informations est prise en charge par le wagon d'approvisionnement (3.1).

4. Procédé selon la revendication 3, **caractérisé en ce que** la première unité de wagon est formée en tant qu'unité à deux wagons (6) avec un wagon d'approvisionnement (3.1) et un wagon supplémentaire (3.2).

5. Procédé selon la revendication 3 ou 4, **caractérisé en ce qu'**une rame ferroviaire (1) est formée laquelle comprend une pluralité de premières unités de wagon (6).

6. Procédé selon l'une des revendications 3 à 5, **caractérisé en ce qu'**une rame ferroviaire (1) est formée laquelle comprend au moins un premier wagon d'approvisionnement (3.1) non intégré dans une unité de wagon (6).

7. Procédé selon l'une des revendications précédentes, **caractérisé en ce qu'**une rame ferroviaire est formée qui comprend au moins un wagon d'approvisionnement, conçu comme wagon de contrôle ou comme wagon de liaison.

8. Procédé selon l'une des revendications précédentes, **caractérisé en ce que**
- un wagon d'approvisionnement (3.1) est couplé avec un deuxième wagon singulier (3.3) pour former une deuxième unité de wagon (106), le deuxième wagon singulier étant conçu comme un wagon de commande à fonctionnement non autonome (3.3),
et/ou
- un wagon d'approvisionnement (3.1) est couplé avec un deuxième wagon singulier (3.4) pour former une troisième unité de wagon (106), le deuxième wagon singulier étant conçu comme un wagon de liaison à fonctionnement non autonome (3.4).

9. Rame ferroviaire composée de wagons singuliers sans équipement de traction, en particulier de wagons passagers, avec
- au moins une unité de traction (2) et au moins un premier wagon singulier à fonctionnement autonome (3.1) couplé à l'unité de traction (2),
- le premier wagon singulier (3.1) étant un wagon d'approvisionnement (3.1) qui qui est configuré pour prendre en charge, en fonctionnement normal, essentiellement la totalité de l'approvisionnement en énergie d'au moins un deuxième wagon singulier à fonctionnement non autonome (3.2, 3.3, 3.4),
**caractérisée en ce que**
- ledit wagon d'approvisionnement (3.1) est configuré pour prendre en charge, en fonctionnement normal, essentiellement la totalité de l'approvisionnement en informations dudit au moins un deuxième wagon singulier à fonctionnement non autonome (3.2, 3.3, 3.4),
- il est prévu un dispositif d'approvisionnement d'informations de train (8) comprenant un dispositif de distribution d'informations de train (8.2), qui est un bus de train, et
- le wagon d'approvisionnement (3.1) comprend un premier dispositif d'approvisionnement d'informations de wagon (11) qui est raccordé au dispositif de distribution d'informations de train (8.2) pour l'approvisionnement en informations du wagon d'approvisionnement (3.1),
- ledit wagon d'approvisionnement (3.1) est couplé avec au moins un deuxième wagon singulier (3.2) pour former une première unité de wagon (6), le deuxième wagon singulier étant conçu comme un wagon supplémentaire à fonctionnement non autonome (3.2),
- ledit premier dispositif d'approvisionnement en information de wagon (11) est conçu pour approvisionner le wagon d'approvisionnement (3.1) et le wagon supplémentaire (3.2) en information et comprend un dispositif de distribution d'information du wagon (11.2) qui est un bus de wagon (9.4), et
- le wagon supplémentaire (3.2) est raccordé au dispositif de distribution d'information du wagon (11.2) pour l'approvisionnement en information.

10. Rame ferroviaire selon la revendication 9, **caractérisée en ce que** le wagon d'approvisionnement (3.1) est configuré pour l'approvisionnement en énergie et en informations d'exactement un second wagon singulier à fonctionnement non autonome (3.2, 3.3, 3.4) en fonctionnement normal.

11. Rame ferroviaire selon la revendication 9 ou 10, **caractérisée en ce qu'**au moins un wagon d'approvisionnement (3.1) est couplé à au moins un second wagon singulier à fonctionnement non autonome (3.2) pour former au moins une première unité de wagon (6), le second wagon (3.2) étant conçu comme un wagon supplémentaire de manière que, en fonctionnement normal, essentiellement la totalité de son alimentation en énergie et en informations est prise en charge par le wagon d'approvisionnement (3.1)..

12. Rame ferroviaire selon la revendication 11, **caractérisée en ce que** la première unité de wagon est formée en tant qu'unité à deux wagons (6) avec un wagon d'approvisionnement (3.1) et un wagon supplémentaire (3.2).

13. Rame ferroviaire selon la revendication 11 ou 12, **caractérisée en ce que** la rame ferroviaire (1) comprend une pluralité de premières unités de wagon (6).

14. Rame ferroviaire selon l'une quelconque des revendications 11 à 13, **caractérisée en ce que** la rame ferroviaire (1) comprend au moins un premier wagon d'approvisionnement (3.1) non intégré dans une unité de wagon (6).

15. Rame ferroviaire selon l'une des revendications 9 à 14, **caractérisée en ce qu'**un wagon d'approvisionnement conçu comme wagon de contrôle ou comme wagon de liaison.

16. Rame ferroviaire selon l'une des revendications 9 à 15, **caractérisée en ce que**
- un wagon d'approvisionnement (3.1) est couplé avec un deuxième wagon singulier (3.3) pour former une deuxième unité de wagon (106), le deuxième wagon singulier étant conçu comme un wagon de commande à fonctionnement non autonome (3.3),
et/ou
- un wagon d'approvisionnement (3.1) est couplé avec un deuxième wagon singulier (3.4) pour former une troisième unité de wagon (106), le deuxième wagon singulier étant conçu comme un wagon de liaison à fonctionnement non autonome (3.4).

17. Rame ferroviaire selon l'une des revendications 9 à 16, **caractérisée en ce que** le premier wagon singulier (3.1) est configuré pour l'approvisionnement en énergie et/ou en information par l'unité de traction (2).

18. Rame ferroviaire selon l'une des revendications 9 à 17, **caractérisée en ce que**
- il est prévu un dispositif d'approvisionnement d'energie de train (7) comprenant un dispositif de distribution d'énergie de train (7.2), qui comprend en particulier une barre collectrice de train, et
- le wagon d'approvisionnement (3.1) comprend un premier dispositif d'approvisionnement de voiture (9) qui pour l'alimentation du wagon d'approvisionnement (3.1) est raccordé au dispositif de distribution d'énergie de train (7.2).

19. Rame ferroviaire selon l'une quelconque des revendications 9 à 18, **caractérisée en ce que**
- un wagon d'approvisionnement (3.1) est couplé avec au moins un deuxième wagon singulier (3.2) pour former une première unité de wagon (6), le deuxième wagon singulier (3.2) étant conçu comme un wagon supplémentaire à fonctionnement non autonome,
- le wagon d'approvisionnement (3.1) comprend un premier dispositif d'approvisionnement en énergie de wagon (9) conçu pour alimenter le wagon d'approvisionnement (3.1) et le wagon supplémentaire (3.2) et comprenant un dispositif de distribution d'énergie du wagon (9.3, 9.4) qui comporte, en particulier, une barre collectrice de wagon (9.4),
- le wagon supplémentaire (3.2) est raccordé au dispositif de distribution d'énergie du wagon (9.3, 9.4) pour l'approvisionnement en énergie.

20. Rame ferroviaire selon l'une des revendications 9 à 19, **caractérisée en ce que** l'unité de traction est une locomotive (2) ou un wagon moteur.

21. Wagon singulier sans équipement de traction, en particulier wagon de passagers, **caractérisé en ce qu'**il est conçu en tant que premier wagon singulier (3.1) à fonctionnement autonome d'une rame ferroviaire (1; 101; 201) selon l'une des revendications 9 à 20.

22. Wagon singulier sans équipement de traction, en particulier wagon de passagers, **caractérisé en ce qu'**il conçu en tant que second wagon singulier (3.2, 3.3, 3.4) à fonctionnement non autonome d'un ensemble de train (1; 101; 201) selon l'une des revendications 9 à 20.

23. Unité de wagon formée d'un wagon singulier selon la revendication 21 et d'au moins un wagon singulier selon la revendication 22.
